# EUROPEAN PATENT SPECIFICATION

(11) **EP 3 997 302 B1**
(45) Date of publication and mention of the grant of the patent: **22.04.2026**
(21) Application number: 20739785.2
(22) Date of filing: 08.07.2020
(51) Int. Cl.: E21B 29/00, F16L 1/028

(54) **DEVICE AND METHOD FOR PROCESSING A CONDUIT**
VORRICHTUNG UND VERFAHREN ZUR BEARBEITUNG EINER LEITUNG
DISPOSITIF ET PROCÉDÉ DE TRAITEMENT D'UNE CONDUITE

(30) Priority: 08.07.2019 NL 2023460
(43) Date of publication of application: 18.05.2022
(73) Proprietor: Callidus Capital B.V., 8445 PA Heerenveen (NL)
(72) Inventor: VEENSTRA, Feitze, 8445 PA Heerenveen (NL)
(74) Representative: V.O.
(86) International application number: PCT/NL2020/050445
(87) International publication number: WO 2021/006732

(56) References cited:
- EP-A1- 0 039 815
- EP-B1- 0 493 645
- WO-A1-91/18235
- DE-A1- 102016 006 251
- DE-A1- 4 303 615
- RU-C2- 2 670 318
- US-A- 3 831 248
- US-A- 4 903 406
- US-A- 4 983 071
- US-A- 5 078 546
- US-A- 5 171 106
- US-A- 5 306 101
- US-A- 5 439 320
- US-A1- 2001 018 007
- US-A1- 2005 262 698
- US-A1- 2011 081 206
- US-A1- 2015 198 279
- US-B2- 8 882 393

## Description

### TECHNICAL FIELD

The various aspects and implementations thereof relate to a method of processing piping. More in particular, the various aspects and implementations relate to removing piping from the ground, for example from a well for winning oil or other natural resources.

### BACKGROUND

Piping for collecting oil from a well or piping for transportation of oil or other resources comprises multiple segments. The segments are connected to one another by means of welding, bolting by means of nuts and bolts, by means of connector members that are connected to two pipe segments by means of threads or other mechanical, chemical or physical bonding.

If well are exhausted or the exploitation of the wells is not expected to be feasible anymore in the future, for example due to a limit amount of resources available in the well, the well may be closed and abandoned. For the abandonment of wells, the production piping/ production tubing is to be removed, for example in view of environmental considerations, further plugging of the well,(to get access with other tools) legislation, other, or a combination thereof.

For removing the piping, a rig - a tower/ snubbing unit or hydraulic work over unit is used, the putting in place thereof is a significant effort. Furthermore, the separation of the various pipe segments takes significant amount of time because of disconnection of the connections.

DE 43 03 615 discloses a method for deforming, splitting and chopping of contaminated, or potentially contaminated, heat exchanger tubes into short tubes segments that easily may transported to an off-site location for decontamination or disposal. The method has particular utility in dismantling potentially contaminated tubes from a tube bundle that is part of a condenser for a nuclear power plant. The method involves first gripping and deforming the exterior periphery of a potentially contaminated tube with opposed transverse forces sufficient to travel the tube longitudinally out of the tubesheets in a deformed condition, and then splitting the deformed tube into first and second wall sections which are chopped into short length wall segments. The deformation preferably flattens the tube so that the short wall segments are substantially planar, with exposed inner and outer surfaces.

DE 10 2016 006251 discloses a method for breaking up and dismantling underground pipelines made of asbestos cement in open construction, which is used with a nominal diameter of greater than DN 500 and a device for carrying out the method. The object of the invention is to create a method for breaking up and removing underground pipelines with a nominal diameter greater than DN 500 made of asbestos cement in an open construction and a device for carrying out the method that ensures environmentally friendly and health-friendly removal and disposal of the pipeline parts.

US 2011/081206 discloses a pipe splitting assembly includes an articulating hammer nose assembly having a pipe splitting cutter and a rotatable joint coupled with the pipe splitting cutter. A pneumatic hammer is distal to the articulating hammer nose assembly, The pneumatic hammer is configured to drive the articulating hammer nose assembly proximally away from the pneumatic hammer. The rotatable joint is coupled between the pipe splitting cutter and the pneumatic hammer, and the articulating hammer nose assembly is rotatable into one or more angles relative to the pneumatic hammer through the rotatable joint. A cable coupling is interposed between the pneumatic hammer and the articulated hammer nose assembly. The cable coupling is configured to attach a cable to the pipe splitting assembly. The cable coupling and the rotatable joint are configured to transmit to the pipe splitting cutter a compression force from the cable coupling and dynamic percussive forces from the pneumatic hammer.

US 2015/198279 discloses an apparatus for replacing an existing pipe. The apparatus comprises a slitter and expander which surround a wire rope. The wire rope is attached to the expander, and the expander abuts either the slitter or a separation tube disposed between the expander and slitter, such that the slitter and expander are pivotable relative to each other. The apparatus is placed in a pipe to be replaced and pulled. While being pulled, blades on the slitter slit the pipe, while a sloped surface of the expander moves the slit sections apart into surrounding soil. A replacement pipe may be pulled by a pipe putter attached to the expander. A beacon may also be disposed within the apparatus to emit a signal for locating the apparatus white underground.

RU 2 670 318 discloses a device for retrieving pipe elements from exhaust pipelines comprises a housing with a front stage with an outer diameter of D, equipped with a node for fixing the exhaust cable, an adapter and a rear stage with an internal diameter and an outside diameter and a device for cutting a spent pipeline with D outer diameter mounted on the front stage and adapter. Device also comprises a centraliser for centring the front stage with respect to the inner surface of the cut pipe. Cutter is made in the form of at least two cutters with sharpened blades, inclined towards the working movement of the device, cutting the pipe into at least two separate parts to ensure that they are pulled to the surface.

US 3,831,248 discloses an apparatus for recovering fuel pellets from a fuel rod by cutting the rod lengthwise into two separate halves to allow fuel pellets therein to drop out of the rod cavity. A fuel rod is positioned in axial alignment with a stationary set of cutters on a table and a winch on the other end of the table pulls the rod through the cutters and in so doing, cuts a groove almost through the opposite sides of the rod. As the machine continues pulling the rod, it is caused to spread open and drop fuel rod pellets into a receptacle for later disposition The split halves of the fuel rod are then of a size and configuration convenient for efficient handling and disposal.

US 5 171 106 A discloses a cutting/expanding tool includes a cylindrical support body having a guide side and a cutting side, a pair of guide rollers mounted in tandem along the longitudinal axis of the support body on the guide side, a cutting wheel mounted between the tandem guide rollers on the cutting side of the support body, and an expander connected rearwardly of the support body. A plurality of cutting wheels may also be provided, each of progressively increasing diameter. A scoring wheel may be mounted forwardly of the cutting wheels to prescore the surface to be cut, so as to facilitate the cutting action, and a deburrer may be mounted rearwardly of all the cutting wheels so as to smooth the cut edge. A method of using the cutting/expanding tool is also described, whereby after the tool has been propelled through a buried main to cut and to expand it, a replacement main is drawn back through the existing main. A conical or wedge shaped expander may be used.

WO 91/18235 A1 discloses a tool for slitting and laterally expanding underground steel gas mains and inserting replacement plastic piping into the spread apart pipeline has a forward end cylindrical portion mounting a single, rearwardly angled blade to make only one line of cut and a conical pipe spreader portion at its rearward end. The conical spreader portion is eccentrically disposed with respect to the forward end cylindrical portion. A single roller type pipe slitter aligned with the fixed blade may be mounted on a removable extension of the forward end cylindrical portion, to initially groove and weaken the pipe along the intended line of cut. A

pneumatically operated impact ram is attached to the rearward end of the tool, as is the leading end of the replacement piping. A wire cable (25) pulls the tool through the underground pipe, thereby grooving, slitting and laterally expanding the pipe.

US 5 439 320 A discloses a system for splitting and spreading existing underground pipe and pipe fittings. A plurality of cutter wheels are positioned within a cutter assembly frame. A first cutter wheel cuts the pipe and scores the pipe fittings. A second cutter wheel rides in the path cut in the pipe by the first cutter wheel and cuts the pipe fittings. A plurality of paired pipe expanders are formed on the outer periphery of the cutter assembly frame. Pipe expanders contact the inner surface of the pipe wall and keep the cross section of the pipe circular while the cutter wheels cut through the pipe and pipe fittings. Also, the paired pipe expanders keep the cutter wheels in a vertical alignment and thirdly, they loosen and scrape residue and built-up material from the inner wall of the pipe. A mandrel is connected to the trailing end of the cutter assembly and to a pipe adapter which in turn is connected to a foremost section of new pipe. The mandrel spreads the cut pipe and fittings and pulls the pipe adapter and the new pipe through the bore of the existing pipe. A train comprised of multiple sections of steel rods is connected to a leading end of the cutter assembly and pulls the cutter assembly and mandrel and pipe adapter and the new pipe through the bore of the existing pipe and pipe fittings. Cable/winching means or hydraulic means supply the motive power to use and operate the system.

US 2001 018007 A1 discloses an apparatus for longitudinal splitting, in particular longitudinal slitting, of pipes laid underground and for the simultaneous trenchless pulling-in of a new pipeline comprises a carriage in the form of a frame, in which a cutting wheel for cutting open the pipe wall and a support roller, which serves as an abutment and is supported on the pipe wall, are arranged above one another. The carriage or

frame has a base which engages in a form-fitting manner in a frame-like window of a pull and/or push linkage.

### SUMMARY

It is preferred to provide a device and a method that may be used for more efficiently processing piping in the process of well abandonment or pipeline removal. The device for processing a conduit is defined by independent claim 1 and the method for processing a conduit is defined by independent claim 14. Other aspects of the invention are defined by the dependent claims.

A first aspect provides a device for processing a conduit. The device comprises a cutting module to cut at least part of the conduit over a longitudinal axis of the conduit by creating a first cut line in the conduit substantially parallel to the longitudinal axis, a separation module arranged to separate a first part of the conduit on a first side of the first cut line from a second part of the conduit on a second side of the first cut line and a transportation module for driving the conduit along the cutting module and the separation module.

The transportation module may be used to pull the piping of the ground, irrespective of whether the piping is in the ground positioned in a vertical way, a horizontal way or under an angle. Hence, the transportation module may be implemented as an extraction module for extracting the piping from the ground.

While the piping is being pulled out of the ground, the piping is directly cut and the cut parts are separated to allow convenient transportation, storage or other further processing of the cut piping.

Furthermore, the separation of the parts of the piping wall at either side of the cut line opens up the piping, which may allow for more convenient and/or more efficient cleaning.

Instead of traditional tubing installation and removal, this opens the way to continues tubing pulling instead of intermittently, without a need of having to decouple piping elements, as the couplings may be cut as well, in one continuous process. Furthermore, lifting of the whole pipe and in particular a lower end of a pipe segment to ground level is also eliminated.

In one implementation, the cutting module is arranged to create the first cut line inside the conduit. And advantage of this implementation is that the cutting module may be positioned such that any irregularities at the outside of the piping, like couplings for coupling pipe segments, do not provide obstacles for the cutting module.

In another implementation, the device comprises an elongate conduit guiding element arranged to be inserted in the conduit, wherein a first cutting sub-module of the cutting module is provided on the conduit guiding element. The conduit guiding element ensures that the piping is cut at the correct location.

In a further implementation, the separation module comprises a wedge shaped splitting element having a wedge point and wherein the conduit guiding element is at a proximal end connected the wedge point. By driving the cut piping towards the wedge, both parts of the piping on either side of the cut are forced to part. This allows, for example, to flatten the cut piping or, as another option, to fully separate different parts of the piping if two or more cuts are provided.

In yet another implementation, the cutting module is arranged to create a first cut line at at least part of the outside of the conduit. Such part may be a coupling or connector that couples two - or optionally more - pipe segments; by cutting the couplings, the segments are separated in one simple step. An advantage of this implementation is that a further implementation is possible, in which the cutting module only cuts the couplings connecting pipe segments and the pipe segments are left intact. As another option, also the pipe segments or the full piping is cut at the outside, either fully or through only part of the wall, in addition to or as an alternative to cutting from within.

Yet a further implementation comprises a flattening module arranged to flatten the separated conduit. Flattened piping is mostly more conveniently to store than curved piping. Furthermore, flattening may make cleaning of piping more efficient.

In again another embodiment, the flattening module comprises rollers positioned forming a curved trajectory for at least part of the separated conduit. Firstly, this allows for flattening of the piping segments without specifically exerting a forced to the piping: due to the piping following a curved trajectory, the piping is flattened. Second, a curved trajectory allows for a compact design.

Again a further embodiment comprises a sorting cutter, arranged to cut the separated conduit under an angle relative to the longitudinal axis. Piping segments may be very long, whereas compact storage may be preferred.

A second aspect provides a method of processing a conduit. The method comprises cutting at least part of the conduit parallel to a longitudinal axis of the conduit by providing a first cut line parallel to the longitudinal axis and separating a first part of the conduit at a first side of the cut line from a second part of the conduit at a second side of the first cut line.

### BRIEF DESCRIPTION OF THE DRAWINGS

The various aspects and implementations thereof will now be discussed in further detail in conjunctions with drawings. In the drawings:
- Figure 1:: shows a system for processing piping;
- Figure 2:: shows a pipe splitter;
- Figure 3:: shows the pipe splitter processing a pipe;
- Figure 4 A:: shows a cross-section of the pipe splitter; and
- Figure 4 B:: shows a detail of the cross-section.

### DETAILED DESCRIPTION

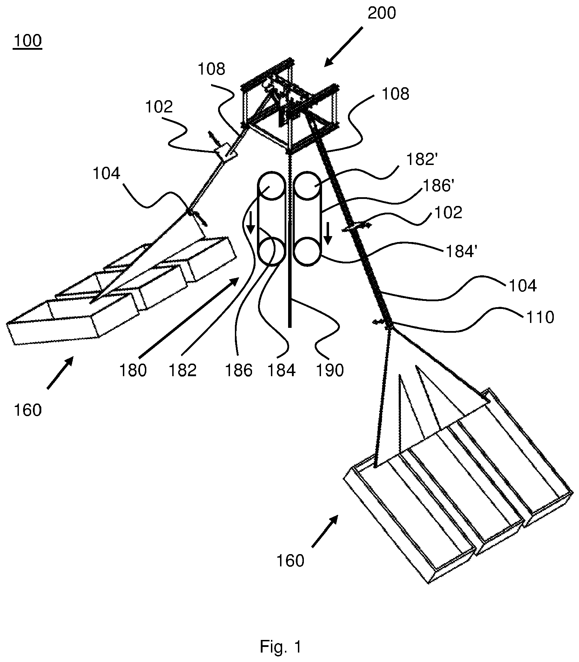

Figure 1 shows a pipe processing system 100 as an implementation of the first aspect. The pipe processing system 100 comprises a pipe and pipe connector splitter 200 for splitting piping and its connectors 190 and two split pipe guides 108. On the pipe guides 108, downstream cutters 102 are provided for segmenting split pipe parts. At the end of the pipe guides, sorters end stops 104 are provided for stopping the strips from sliding down for length cutting. A turner or rocker turns the strip 90 degrees over the longitudinal axis of the cut pipe part. This allows the cut pipe part to pass the end stop en enter into the wipers to direct to a selected scrap bin, by two parallel wipers 110 is for guiding cut pipe parts to a specific bin 106 of the bins 106.

The pipe processing system 100 further comprises a pipe extractor 180 for extracting the piping 190 from the ground or well. In the implementation shown, the pipe extractor 180 comprises a first drive belt 186 and a second driven belt 186. The two belts 186 are biased towards the piping. The first drive belt 186 is driven by a left first wheel 182 and a left second wheel 184 and the second drive belt 186 is driven by a right first wheel 182' and a right second wheel 184. By driving the wheels, the belts are driven. The belts are driven such that the part biased towards the piping 190 moves in the direction of the pipe splitter 200.

In another implementation, the pipe extractor 180 does not comprise a belt, but one or more wheels that are biased towards the piping 190 such that the wheels exert a force on the piping resulting in the piping 190 moving towards the pipe splitter 200. The wheels may be provided with a profile, like toothing, a rubber liner comprising a particular profile, other, or a combination thereof.

In yet another implementation, the piping 190 is fed to the pipe splitter in steps by means of a snubber. The snubber grips the piping 190 and moves it, for example by means of one or more hydraulic cylinders, towards the pipe splitter. For removal of pipe lines with a pulling cylinder with inner gripper, a remaining pipe piece may be used as anchor. In another implementation, these options may be combined.

Whereas in Figure 1, the pipe processing system 100 is shown extracting a pipe in vertical direction, extraction of a horizontally oriented pipe may be envisaged as well.

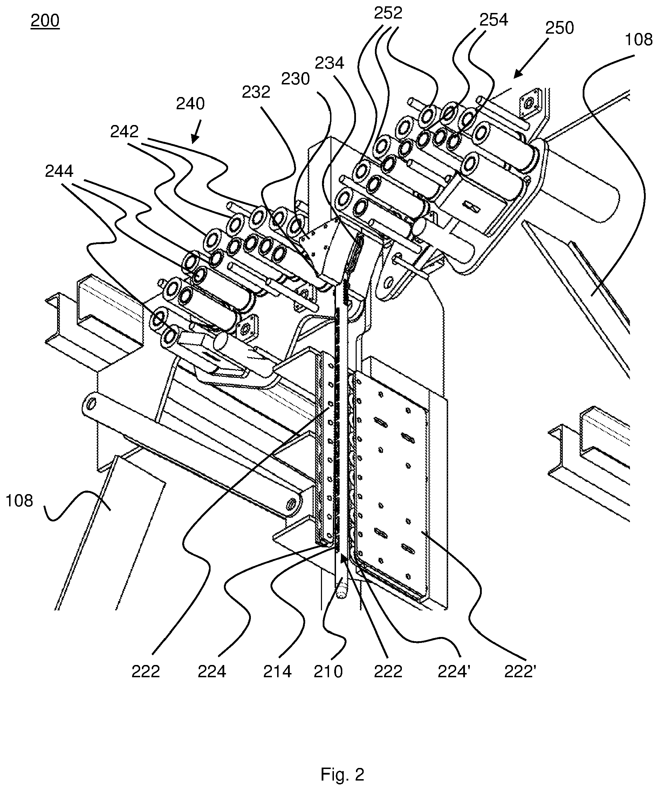

Figure 2 shows the pipe splitter 200 in further detail. In the middle, a pipe guide 210 is shown arranged to have the piping 190 slid over it. The pipe guide 210 is at a distal end connected to a wedge 230 to split the cut or partial cut pipe , at the wedge point 232. In this implementation, the wedge is provided with rollers 234 to lower the friction on the wedge. In the embodiment depicted by Figure 2, the piping 190 is split in two parts. In another embodiment, the piping 190 is split in three or more parts. In such embodiment, the wedge 230 may have a different shape, for example that of a pyramid with an amount of apex ribs equal to the amount of cut lines or a substantially conical or frusto-conical shape.

Left of the wedge 230, a first roller module 240 is provided. The first roller module 240 comprises a set of first upper rollers 242 and a set of first lower rollers 244. All or some of the first rollers may be drivable by a driving unit like an electromotor, a hydraulic motor or other providing similar functionality. Only one or more first upper rollers 242 may be driven and/or only one or more of the first lower rollers 244 may be driven.

Right of the wedge 230, a second roller module 250 is provided. The second roller module 240 comprises a set of second upper rollers 252 and a set of second lower rollers 254. All or some of the second rollers may be drivable by a driving unit like an electromotor, a hydraulic motor or other providing similar functionality. Only one or more second upper rollers 252 may be driven and/or only one or more of the second lower rollers 254 may be driven. The rollers of the roller modules are positioned forming a curved trajectory. The upper rollers and the lower rollers may be pressed to one another, under a bias. Alternatively, they are not pressed to one another. The curved trajectory may be followed by a substantially straight trajectory for cut piping provided by the roller. This straight trajectory functions as a straightener arranged to provide flat and straight pipe segments. Alternatively, this final trajectory is slightly curved in a direction opposite to the earlier curve for providing the straightening function.

In the pipe guide 210, an inner cutting module 212 is provided. The inner cutting module 212 comprises a set of inner cutting wheels 214. The inner cutting wheels 214 are arranged to cut the piping 190 by providing a cut line in the piping 190, the cutline lying in a cut plane perpendicular to a roller plane in which the first roller module 240 and the second roller module 250.

The inner cutting module comprises in this implementation pairs of inner cutting wheels 214, of which pairs a first inner cutting wheel 214 extends from the pipe guide 210 opposite from where a second inner cutting wheel 214 of the pair extends from the pipe guide 210. In another implementation, inner cutting wheels extend from only one side of the pipe guide 210.

Adjacent to the inner cutting module 214, a first outer cutting module 222 is provided at a first side of the inner cutting module 214 at a second side of the inner cutting module 214, opposite to the second side, a second outer cutting module 222' is provided. The first outer cutting module 222 comprises first outer cutting wheels 224 and the second outer cutting module 222' comprises second outer cutting wheels 224'. Outer cutting wheels 224 are preferably positioned adjacent to inner cutting wheels 214 or in the same cutting plane. The cutting wheels - inside and/or outside - are preferably greased or otherwise provided with a lubricant and/or provided with a coolant.

In the implementations above, the cutting modules are disclosed as comprising sequence of cutting wheels that provide a cut line with increasing depth as the piping proceeds through the pipe splitter. In other implementations, other cutting means may be used, including high pressure water jet cutters, plasma /laser cutters, wire cutters, grinding, milling, scrapping, a chisel, spark erosion, chemical erosion thermal lance, acetylene burner or other, or a combination thereof.

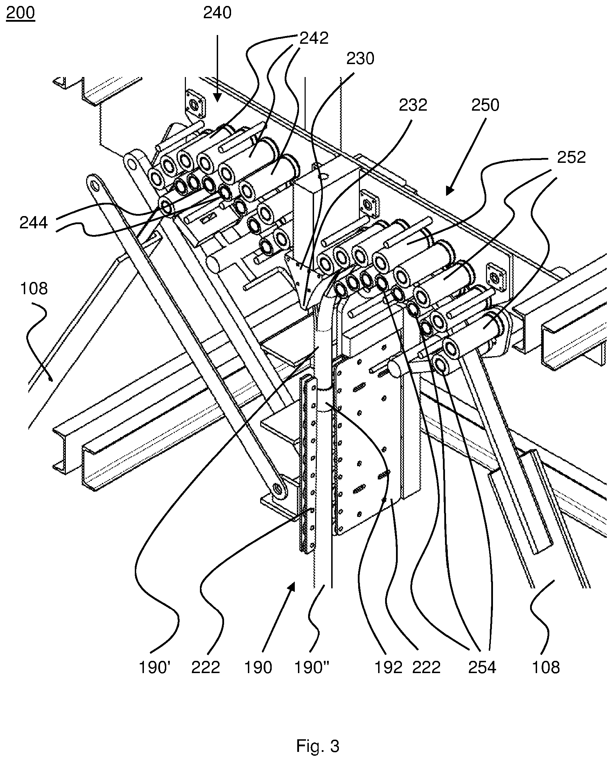

Figure 3 shows the pipe splitter 200, with tubing 190 provided in the pipe splitter 200. The pipe guide 210 is not visible in Figure 3, as it is inserted in the piping 190. The piping 190 as shown by Figure 3 comprises a first pipe segment 190' and a second pipe segment 190". The first pipe segment 190' and the second pipe segment 190" are connected by means of a pipe coupling 192. The first pipe segment 190' and the second pipe segment 190" comprise threads an preferably outer threads at their opposite ends. The pipe coupling 192 has a thread arranged to engage with the threads of the pipe segments. The pipe coupling 192 preferably comprises inner threads and preferably has a wider outer diameter than the pipe segments.

From Figure 3 can be seen that the piping 190 is cut by the inner cutting module 212 and the first outer cutting module 222 and the second outer cutting module 222'. The cut piping 190 is fed to the wedge 230 and in particular towards the wedge point 232. By exerting a force on the piping 190 towards the wedge point 232, the piping 190 is split in a first half and a second half.

The first half is led to the first roller module 240 and the second half is led to the second roller module 250. In an implementation in which at least some of the rollers are driven, the roller provide a force that allows for the cut piping to be pushed to the wedge point 232. Second, the rollers are arranged to flatten the first half and the second half. Whereas rollers are preferred for flattening the cut piping, other means for flattening like hammers may be used as well. In another implementation, the bending itself flattens the pipe. Optionally, the strips are straightened after the bending.

The wall of the first pipe segment 190' may have been fully cut through or only severed or weakened by a cut line that does not extend from the inside to the outside of the first pipe segment 190'. In the latter case, the force exerted on the first pipe segment 190' towards the wedge point 232 will result in breaking of the first pipe segment 190' of the cut line that has been provided parallel to the longitudinal axis of the first pipe section 190'.

It is noted that whereas Figure 2 and Figure 3 show the wedge 230 having an actual wedge shape - or having a triangular prism shape, also other shapes may be used as a splitting member for separating two parts of the first pipe segment 190' on either side of one or more cut lines. Alternatively or additionally, the splitting or separating part of the pipe splitter 200 may comprise a pyramid or cut (frusto) pyramid shape, with three or more apex ribs - ribs from base to apex.

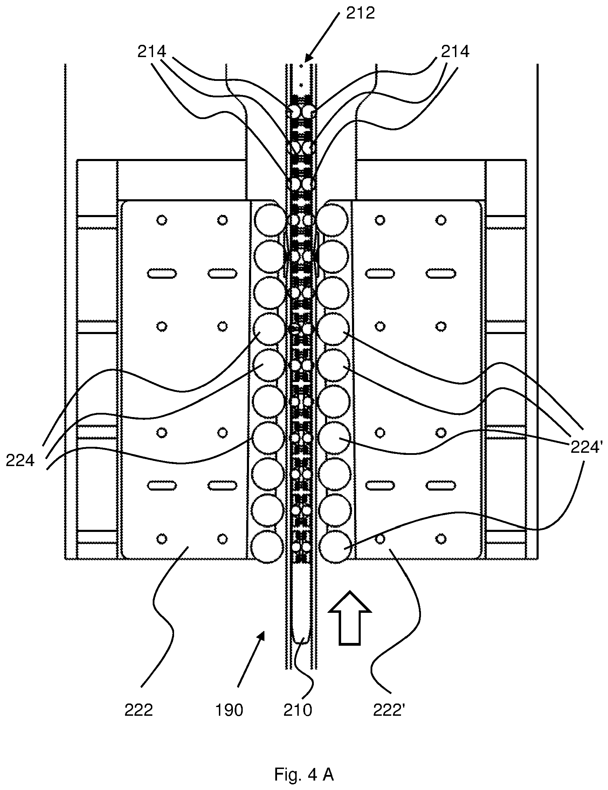

Figure 4 A shows a cross-section of the inner cutting module 212, the first outer cutting module 222 and the second outer cutting module 222' with the piping 190 provided over the pipe guide 210. Figure 4 A shows that from the proximal point of the pipe guides - at the lower part of Figure 4 A - towards the distal end of the pipe guide 210, the inner cutting wheels 214 protrude further from the inner cutting module 212.

At the proximal end of the inner cutting module 212, the inner cutting wheels 214 protrude only slightly from the pipe guide 210 to provide only a shallow cut line in the piping 190. At the distal end of the inner cutting module 212, the inner cutting wheels 214 protrude from the pipe guide 210 such that they fully cut thought the first pipe segment 190'. In another implementation, the distal inner cutting wheels 214 do not fully cut through the wall of the first pipe segment 190', but far enough to make the first pipe segment 190' split when driven to the wedge point 232. In yet another implementation, the distal cutting wheels 214 extend such from the pipe guide that they also cut through the pipe coupling 192.

Figure 4 A also shows the outer cutting wheels protruding from the outer cutting modules. At the left, the first outer cutting module 220 is shown with first outer cutting wheels 224. At the right, the second outer cutting module 220' is shown with second outer cutting wheels 224'.

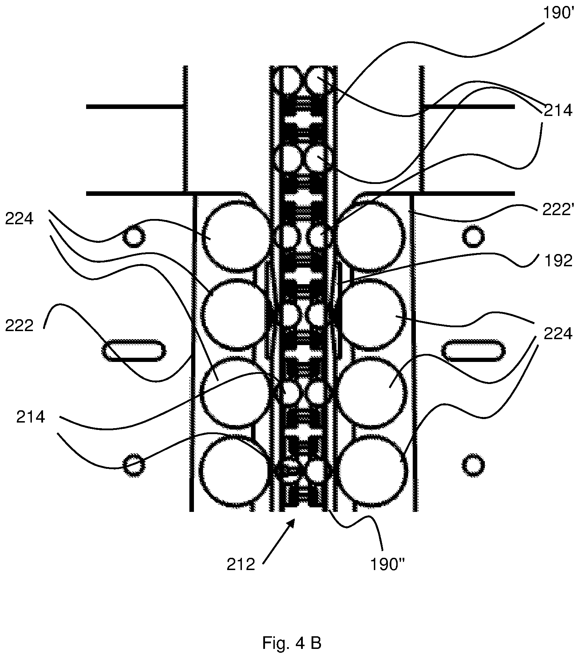

At the distal end of the outer cutting modules 222, the outer cutting wheels 224 protrude such that they fully cut thought the pipe coupling 192. This is shown in further detail in Figure 4 B. Preferably, the distal outer cutting wheels 242 also cut through the inner threads of the pipe coupling 192, if available. In one implementation, the outer cutting modules 222 cut the couplings 192, preferably fully, including the threads, and the inner cutting module 212 cut the pipe segments 190. In such implementations, each of the inner cutting module 212 and the outer cutting modules 222 has its specific functionality. Alternatively, all cutting is done by either the inner cutting module 212 or the outer cutting modules 222. In yet another implementation, at least one of the inner cutting module 212 and the outer cutting modules 222 cut both through the pipe segments 190 and the couplings 192. In particular if the outer cutting modules 222 cut through the threads of the couplings 192, they may cut through at least part of the outer wall of the pipe segments 190. In yet another implementation, distance between the outer cutting modules 222 and the pipe segments 190 may be modified such that the outer cutting modules 222 move closer to the pipe segments 190 when a coupling 192 is to be cut and they are moved away from the pipe segments 190 when no coupling is present at the outer cutting modules 222 as to prevent or reduce severing of an outer wall of a pipe segment 190. In the latter implementation, the pipe segments are not separated and optionally not flattened.

In another implementation, the distal outer cutting wheels 224 do not fully cut through the pipe coupling 192, but far enough to make the pipe coupling 192 split when driven to the wedge point 232. In yet another implementation, the distal cutting wheels 214 extend such from the pipe guide that they also cut through the first pipe segment 190'.

The pipe splitter 200 may be provided and operated with only the inner cutting module 212, only one or both the outer cutting module 222 or with all three cutting modules - or even more cutting modules.

In one implementation, only the first outer cutting module 222 and/or the second outer cutting module 222' are provided, arranged to cut through the pipe coupling 192. In such implementation, the pipe coupling 192 may be split, either by widening the cut line if only one cut line is provided by a single outer cutting module. In other implementation, the pipe coupling 192 is cut by means of two or more cut lines and if the cuts are fully through, including the thread, the pipe coupling falls apart and disengages from the first pipe segment 190' and the second pipe segment 190". Operation of this implementation allows for automated segmentation of the piping 190, while keeping pipe segments intact.

In yet another implementation, the coupling 192 is cut in two or more parts, as described directly above an, additionally, the pipe segments 190' and 190" are provided with only one cut line over which the pipe segments 190' and 190" are opened. In this implementation, parts of the pipe segments 190' and 190" are separated and the pipe segments 190' and 190" are opened, preferably flattened in one piece per pipe segment. Advantages of this implementation are that only one discharge of cut pipe segments is required and that only one cutting module is required to cut the pipe segments.

In another implementation, only one cut line is provided parallel to the longitudinal direction of the piping 190, either fully through the wall of the piping 190 or not fully through, yet severing or weakening the wall of the piping 190 over a cut line. In this implementation, the pipe is split by separating first pipe part at one side of the cut line from a second pipe part at another side of the cut line. This may be executed by means of the wedge 230 or by means of another body providing wedging functionality, like a cone or truncated cone. If the pipe wall is only severed, it may be broken open over the cut line by means of the wedge or cone. Subsequently, the thus widened and cut pipe may optionally be flattened as discussed above.

In again another implementation, one, two or more cut lines are provided substantially parallel to the longitudinal axis of the piping 190. In this embodiment, the piping 109 is folded over the one, two or more cut lines and flattened. In one specific embodiment, the folding of the piping 190 thus cut may result in breaking over the cut lines, resulting in separation of the parts of the piping 190 over the cut lines. Other methods of separation may be applied as well, like driving over a wedge or the like as a splitter. In this implementation, the flattener - like the rollers, hammers, other, or a combination thereof - also provide the functionality of the splitter and a separate splitter is not required. Also other embodiments may be envisaged in which no separate splitter is required.

The system for processing piping or other conduits is particularly useful for processing piping used for exploitation of crude oil or natural gas wells. This means that the piping processed may comprise residue of the crude oil. And in other scenarios, the piping may comprise other material that may be hazardous for the environment. Therefore, it is preferred to provide a receptacle or collector below the splitter 200 as depicted by Figure 1. The collector or receptacle comprises an opening for the piping and further surrounds the piping, preferably above the pipe extractor 180 and below the pipe splitter 200. With a gutter to the bins, the receptacle is also suitable for receipt and op the split couplings and guidance to the scrap bin.

## Claims

1. Device (100) for processing a conduit (190) comprising coupling elements (192), the device comprising:
a cutting module (212, 222) arranged to cut at least part of the conduit over a longitudinal axis of the conduit by creating a first cut line in the conduit substantially parallel to the longitudinal axis;
a separation module (230) arranged to separate a first part of the conduit on a first side of the first cut line from a second part of the conduit on a second side of the first cut line; and
a transportation module (180, 240, 250) for driving the conduit along the cutting module and the separation module;
**characterised in that** the cutting module is arranged to create a first cut line at at least part of the outside of the conduit and the cutting module comprises a second cutting sub-module (212, 222) arranged to provide the first cut line in the coupling elements.

2. Device (100) according to claim 1, wherein the cutting module (212, 222) is arranged to create the first cut line inside the conduit (190).

3. Device (100) according to claim 2, further comprising an elongate conduit (190) guiding element (210) arranged to be inserted in the conduit, wherein a first cutting sub-module of the cutting module is provided on the conduit guiding element.

4. Device (100) according to claim 3, wherein the separation module (230) comprises a wedge shaped splitting element having a wedge point and wherein the conduit guiding element (210) is at a proximal end connected the wedge point.

5. Device (100) according to any of the preceding claims, wherein the cut line is a cut through a wall of at least part of the conduit (190).

6. Device (100) according to any of the preceding claims wherein the cutting module (212, 222) is arranged to create a second cut line in the conduit substantially parallel to the longitudinal axis and opposite to the first cut line.

7. Device (100) according to claim 6, wherein the separation module (230) is arranged to separate a first half of the conduit (190) from a second half of the conduit, the halves being defined by the first cut line and the second cut line.

8. Device (100) according to any of the preceding claims, further comprising a flattening module (240, 250) arranged to flatten the separated or cut conduit (190).

9. Device (100) according to claim 8, to the extent dependent on claim 7, wherein the flattening module (240, 250) comprises a first flattening sub-module (240, 250) for flattening the first half and a second flattening sub-module (240, 250) for flattening the second half.

10. Device (100) according to claim 8 or claim 9, wherein the flattening module (240, 250) comprises rollers (242, 252) arranged to exert a force on the separated conduit (190).

11. Device (100) according to any of the claims 8 to 10, wherein the flattening module (240, 250) comprises rollers (242, 252), that are positioned forming a curved trajectory for at least part of the separated conduit and wherein, optionally, further rollers (242, 252) are provided forming a further trajectory being straight or having a curved with an orientation opposite to the earlier curved trajectory for straightening flatted pipe segments.

12. Device (100) according to any of the preceding claims, further comprising a sorting cutter (102), arranged to cut the separated conduit (190) under an angle relative to the longitudinal axis

13. Device (100) according to any of the preceding claims, wherein the transportation module (180, 240, 250) comprises at least one belt (186, 186') or a wheel (182, 182', 184') arranged to drive the conduit (190) by transferring a motion of the belt of the wheel from the belt to the conduit.

14. Method of processing a conduit (190), the method comprising:
cutting at least part of the conduit parallel to a longitudinal axis of the conduit by providing a first cut line parallel to the longitudinal axis;
separating a first part of the conduit at a first side of the cut line from a second part of the conduit at a second side of the first cut line; and
driving the conduit along the cutting module and the separation module;
wherein the conduit comprises segments having a first outer width connected by connectors (192) having a second outer width wider than the first outer width, the method comprising providing the first cut line to at least one connector and separating a first part of the connector at a first side of the first cut line from a second part of the connector at a second side of the first cut line.

15. Method according to claim 14, wherein the segments comprise an outer thread provided on at least a proximal end of the segment and the connectors (192) comprise an inner thread arranged to engage with the outer thread and wherein the method comprises cutting the connector to a depth that the inner thread is cut.

## Patentansprüche

1. Vorrichtung (100) zur Bearbeitung einer Leitung (190), mit Kopplungselemente (192), die Vorrichtung umfassend:
ein Schneidemodul (212, 222), das dazu angeordnet ist, wenigstens einen Teil der Leitung über eine Längsachse der Leitung durch Erzeugen einer ersten Schnittlinie in der Leitung im Wesentlichen parallel zur Längsachse zu schneiden;
ein Trennmodul (230), das dazu angeordnet ist, einen ersten Teil der Leitung auf einer ersten Seite der ersten Schnittlinie von einem zweiten Teil der Leitung auf einer zweiten Seite der ersten Schnittlinie zu trennen; und
ein Transportmodul (180, 240, 250) zum Vorantreiben der Leitung entlang des Schneidemoduls und des Trennmoduls;
**dadurch gekennzeichnet, dass** das Schneidemodul dazu angeordnet ist, an zumindest einem Teil der Außenseite der Leitung eine erste Schnittlinie zu erzeugen, und das Schneidemodul ein zweites Schneide-Teilmodul (212, 222) aufweist, das dazu angeordnet ist, die erste Schnittlinie in den Kopplungselementen bereitzustellen.

2. Vorrichtung (100) nach Patentanspruch 1, wobei das Schneidemodul (212, 222) dazu angeordnet ist, die erste Schnittlinie innerhalb der Leitung (190) zu erzeugen.

3. Vorrichtung (100) nach Patentanspruch 2, ferner umfassend ein längliches Führungselement (190) für die Leitung (210), das dazu angeordnet ist, in die Leitung eingesetzt zu werden, wobei an dem Leitungsführungselement ein erstes Schneide-Teilmodul des Schneidemoduls bereitgestellt ist.

4. Vorrichtung (100) nach Patentanspruch 3, wobei das Trennmodul (230) ein keilförmiges Spaltelement mit einer Keilspitze aufweist, und wobei das Leitungsführungselement (210) an einem proximalen Ende mit der Keilspitze verbunden ist.

5. Vorrichtung (100) nach einem der vorhergehenden Patentansprüche, wobei die Schnittlinie ein Schnitt durch eine Wand von wenigstens einem Teil der Leitung (190) ist.

6. Vorrichtung (100) nach einem der vorhergehenden Patentansprüche, wobei das Schneidemodul (212, 222) dazu angeordnet ist, eine zweite Schnittlinie in der Leitung im Wesentlichen parallel zur Längsachse und gegenüber der ersten Schnittlinie zu erzeugen.

7. Vorrichtung (100) nach Patentanspruch 6, wobei das Trennmodul (230) dazu angeordnet ist, eine erste Hälfte der Leitung (190) von einer zweiten Hälfte der Leitung zu trennen, wobei die Hälften durch die erste Schnittlinie und die zweite Schnittlinie definiert sind.

8. Vorrichtung (100) nach einem der vorhergehenden Patentansprüche, ferner umfassend ein Plättungsmodul (240, 250), das dazu angeordnet ist, die getrennte oder geschnittene Leitung (190) zu Plätten.

9. Vorrichtung (100) nach Patentanspruch 8, sofern abhängig von Patentanspruch 7, wobei das Plättungsmodul (240, 250) ein erstes Plättungs-Teilmodul (240, 250) zum Plätten der ersten Hälfte und ein zweites Plättungs-Teilmodul (240, 250) zum Plätten der zweiten Hälfte aufweist.

10. Vorrichtung (100) nach Patentanspruch 8 oder Patentanspruch 9, wobei das Plättungsmodul (240, 250) Rollen (242, 252) aufweist, die dazu angeordnet sind, eine Kraft auf die abgetrennte Leitung (190) auszuüben.

11. Vorrichtung (100) nach einem der Patentansprüche 8 bis 10, wobei das Plättungsmodul (240, 250) Rollen (242, 252) aufweist, die dazu positioniert sind, für wenigstens einen Teil der getrennten Leitung eine gekrümmte Bahn zu bilden und wobei optional weitere Rollen (242, 252) bereitgestellt sind, die eine weitere Bahn bilden, die gerade ist oder eine Krümmung mit einer der zuvor gekrümmten Bahn entgegengesetzten Ausrichtung zum Begradigen geplätteter Leitungssegmente aufweist.

12. Vorrichtung (100) nach einem der vorhergehenden Patentansprüche, ferner umfassend einen Sortierschneider (102), der dazu angeordnet ist, die getrennte Leitung (190) in einem Winkel relativ zur Längsachse zu schneiden.

13. Vorrichtung (100) nach einem der vorhergehenden Patentansprüche, wobei das Transportmodul (180, 240, 250) wenigstens einen Riemen (186, 186') oder ein Rad (182, 182', 184') aufweist, dazu angeordnet, die Leitung (190) voranzutreiben, indem eine Bewegung des Riemens des Rads vom Riemen auf die Leitung übertragen wird.

14. Verfahren zur Bearbeitung einer Leitung (190), wobei das Verfahren umfasst:
Schneiden wenigstens eines Teils der Leitung parallel zu einer Längsachse der Leitung, indem eine erste Schnittlinie parallel zur Längsachse bereitgestellt wird;
Trennen eines ersten Teils der Leitung an einer ersten Seite der Schnittlinie von einem zweiten Teil der Leitung an einer zweiten Seite der ersten Schnittlinie; und
Vorantreiben der Leitung entlang des Schneidmoduls und des Trennmoduls;
wobei die Leitung Segmente aufweist, die eine erste äußere Breite aufweisen, verbunden durch Verbinder (192), die eine zweite äußere Breite aufweisen, die breiter als die erste äußere Breite ist, wobei das Verfahren umfasst, die erste Schnittlinie mindestens einem Verbinder bereitzustellen und einen ersten Teil des Verbinders an einer ersten Seite der ersten Schnittlinie von einem zweiten Teil des Verbinders an einer zweiten Seite der ersten Schnittlinie zu trennen.

15. Verfahren nach Patentanspruch 14, wobei die Segmente ein Außengewinde aufweisen, bereitgestellt an wenigstens einem proximalen Ende des Segments, und wobei die Verbinder (192) ein Innengewinde aufweisen, das dazu angeordnet ist, mit dem Außengewinde in Eingriff zu gelangen, und wobei das Verfahren das Schneiden des Verbinders bis zu einer Tiefe umfasst, auf welche das Innengewinde geschnitten wird.

## Revendications

1. Dispositif (100) de traitement d'une conduite (190) comprenant des éléments de raccordement (192), le dispositif comprenant :
un module de coupe (212, 222) agencé pour découper au moins une partie de la conduite sur un axe longitudinal de la conduite en créant une première ligne de coupe dans la conduite sensiblement parallèle à l'axe longitudinal ;
un module de séparation (230) agencé pour séparer une première partie de la conduite sur un premier côté de la première ligne de coupe d'une deuxième partie de la conduite sur un deuxième côté de la première ligne de coupe ; et
un module de transport (180, 240, 250) pour entraîner la conduite le long du module de coupe et du module de séparation ;
**caractérisé en ce que** le module de coupe est agencé pour créer une première ligne de coupe au niveau d'au moins une partie de l'extérieur de la conduite et le module de coupe comprend un deuxième sous-module de coupe (212, 222) agencé pour fournir la première ligne de coupe dans les éléments de raccordement.

2. Dispositif (100) selon la revendication 1, dans lequel le module de coupe (212, 222) est agencé pour créer la première ligne de coupe à l'intérieur de la conduite (190).

3. Dispositif (100) selon la revendication 2, comprenant en outre un élément de guidage (210) de conduite (190) allongé agencé pour être inséré dans la conduite, dans lequel un premier sous-module de coupe du module de coupe est prévu sur l'élément de guidage de conduite.

4. Dispositif (100) selon la revendication 3, dans lequel le module de séparation (230) comprend un élément de division cunéiforme présentant une pointe cunéiforme et dans lequel l'élément de guidage de conduite (210) est au niveau d'une extrémité proximale reliée à la pointe cunéiforme.

5. Dispositif (100) selon l'une quelconque des revendications précédentes, dans lequel la ligne de coupe est une découpe à travers une paroi d'au moins une partie de la conduite (190).

6. Dispositif (100) selon l'une quelconque des revendications précédentes dans lequel le module de coupe (212, 222) est agencé pour créer une deuxième ligne de coupe dans la conduite sensiblement parallèle à l'axe longitudinal et opposée à la première ligne de coupe.

7. Dispositif (100) selon la revendication 6, dans lequel le module de séparation (230) est agencé pour séparer une première moitié de la conduite (190) d'une deuxième moitié de la conduite, les moitiés étant définies par la première ligne de coupe et la deuxième ligne de coupe.

8. Dispositif (100) selon l'une quelconque des revendications précédentes, comprenant en outre un module d'aplatissement (240, 250) agencé pour aplatir la conduite (190) séparée ou découpée.

9. Dispositif (100) selon la revendication 8, dans la mesure où elle dépend de la revendication 7, dans lequel le module d'aplatissement (240, 250) comprend un premier sous-module d'aplatissement (240, 250) pour aplatir la première moitié et un deuxième sous-module d'aplatissement (240, 250) pour aplatir la deuxième moitié.

10. Dispositif (100) selon la revendication 8 ou la revendication 9, dans lequel le module d'aplatissement (240, 250) comprend des rouleaux (242, 252) agencés pour exercer une force sur la conduite (190) séparée.

11. Dispositif (100) selon l'une quelconque des revendications 8 à 10, dans lequel le module d'aplatissement (240, 250) comprend des rouleaux (242, 252), qui sont positionnés de sorte à former une trajectoire incurvée pour au moins une partie de la conduite séparée et dans lequel, éventuellement, d'autres rouleaux (242, 252) sont disposés de sorte à former une autre trajectoire rectiligne ou présentant une courbe avec une orientation opposée à la trajectoire incurvée antérieure pour redresser les segments de tuyau aplatis.

12. Dispositif (100) selon l'une quelconque des revendications précédentes, comprenant en outre un dispositif de coupe et de tri (102), agencé pour couper la conduite (190) séparée selon un angle par rapport à l'axe longitudinal.

13. Dispositif (100) selon l'une quelconque des revendications précédentes, dans lequel le module de transport (180, 240, 250) comprend au moins une courroie (186, 186') ou une roue (182, 182', 184') agencée pour entraîner la conduite (190) par transfert d'un mouvement de la courroie de la roue de la courroie à la conduite.

14. Procédé de traitement d'une conduite (190), le procédé comprenant :
la découpe d'au moins une partie de la conduite parallèlement à un axe longitudinal de la conduite par fourniture d'une première ligne de coupe parallèle à l'axe longitudinal ;
la séparation d'une première partie de la conduite au niveau d'un premier côté de la ligne de coupe d'une deuxième partie de la conduite au niveau d'un deuxième côté de la première ligne de coupe ; et
l'entraînement de la conduite le long du module de coupe et du module de séparation ;
dans lequel la conduite comprend des segments présentant une première largeur externe raccordés par des raccords (192) présentant une deuxième largeur externe plus large que la première largeur externe, le procédé comprenant la fourniture de la première ligne de coupe sur au moins un raccord et la séparation d'une première partie du raccord au niveau d'un premier côté de la première ligne de coupe d'une deuxième partie du raccord au niveau d'un deuxième côté de la première ligne de coupe.

15. Procédé selon la revendication 14, dans lequel les segments comprennent un filetage externe fourni sur au moins une extrémité proximale du segment et les raccords (192) comprennent un filetage interne agencé pour se mettre en prise avec le filetage externe et dans lequel le procédé comprend la découpe du raccord jusqu'à une profondeur à laquelle le filetage interne est découpé.
